# FASCICULE DE BREVET EUROPEEN

(11) **EP 0 925 477 B1**
(45) Date de publication et mention de la délivrance du brevet: **05.02.2003**
(21) Numéro de dépôt: 98920619.8
(22) Date de dépôt: 14.04.1998
(51) Int. Cl.: F27B 7/22, F16C 13/04

(54) **DISPOSITIF SUPPORT POUR TAMBOUR ROTATIF**
ABSTÜTZVORRICHTUNG FÜR EINEN DREHROHROFEN
CYLINDRICAL DRUM SUPPORT DEVICE

(30) Priorité: 16.04.1997 FR 9704922
(43) Date de publication de la demande: 30.06.1999
(73) Titulaire: F C B, 93100 Montreuil Cédex (FR)
(72) Inventeur: METTAVANT, Pierre, deceased (FR); CHIELENS, Alain, F-59420 Mouvaux (FR)
(74) Mandataire: Duthoit, Michel
(86) Numéro de dépôt international: FR9800750
(87) Numéro de publication internationale: WO98046952

(56) Documents cités:
- EP-A- 0 019 136
- EP-A- 0 567 777
- EP-A- 0 635 650
- DE-A- 3 540 590
- FR-A- 2 362 334

## Description

La présente invention concerne un dispositif support pour tambour rotatif tel que, par exemple, four, sécheur, refroidisseur, ou autres, destiné, notamment, aux traitements thermiques et/ou chimiques de matières. Elle concerne également un tambour rotatif équipé d'un tel dispositif support (FR 2 362 334 A).

Bien que plus particulièrement développée pour les applications mentionnées plus haut, la présente invention pourra également être utilisée dans de nombreux autres secteurs de l'activité économique tels que, par exemple, l'industrie agro-alimentaire pour équiper, notamment, des extracteurs primaires de sucre ou autres.

Les tambours rotatifs actuellement utilisés dans ces différents domaines sont habituellement de forme sensiblement cylindrique et allongée. Pour permettre leur support, ils reposent sur des galets cylindriques, disposés en général par paires pour constituer une station de roulement coopérant directement avec l'enveloppe extérieure du tambour ou avec des anneaux de roulement et/ou bandages, prévus autour de ladite enveloppe extérieure.

Les axes des galets sont parallèles à l'axe principal du tambour. Les stations de roulement, et donc les anneaux, sont au nombre minimum de deux : on a dans ce cas un supportage isostatique du tambour. Ils peuvent aussi être plus nombreux, en fonction des dimensions de l'appareil, et notamment du rapport longueur / diamètre. On pourra ainsi rencontrer trois, quatre ou plus stations de roulement. On a alors un supportage hyperstatique.

A titre d'exemple, les fours de calcination utilisés dans l'industrie du ciment ou pour le traitement des minerais ont des diamètres pouvant dépasser 7 m et des longueurs pouvant dépasser 200 m ; les extracteurs primaires de sucre peuvent avoir un diamètre de 9 m et plus pour une longueur de 60 m et plus.

Le mouvement de rotation de l'appareil est le plus souvent obtenu grâce à une couronne dentée fixée à la paroi extérieure, entraînée par un ou plusieurs pignons eux-mêmes mus par un moteur.

Une autre technique connue, notamment dans l'industrie du sucre, consiste à entraîner l'appareil directement par frottement entre galet et anneau de roulement, un ou plusieurs galets étant mus par l'intermédiaire d'une transmission mécanique ou hydraulique.

Le tambour rotatif est soumis à de nombreuses contraintes mécaniques, soit du fait de son mouvement, et du poids de la matière en cours de traitement, soit du fait de gradients de températures lorsqu'il y a échange thermique. Il est par conséquent susceptible de se déformer, de façon temporaire ou définitive, de telle sorte que son axe principal ne soit plus rectiligne.

Une conséquence est que la partie de son axe située au niveau du contact entre galet et anneau de roulement n'est pas parallèle à l'axe des galets.

Dans ce cas, le contact entre les galets et l'anneau de roulement n'est pas uniforme sur toute la largeur. La contrainte appliquée au galet, et à l'anneau de roulement, peut alors atteindre des valeurs localement élevées qui provoquent une usure anormale et irrégulière.

De plus, lorsque le tambour est entraîné dans sa rotation par le ou les galets, la surface de contact peut devenir insuffisante pour transmettre le couple moteur.

Pour éviter cet inconvénient, on connaît des supports de galet permettant de maintenir l'axe de ce dernier toujours parallèle à celui de l'anneau de roulement. Toutefois, dans les dispositifs développés à ce jour pour obtenir ce résultat, la mobilité du support de galet est obtenue grâce à des liaisons glissantes.

De tels dispositifs nécessitent donc un entretien pour que le glissement soit toujours capable de s'effectuer. De plus, ledit glissement entraîne une usure des pièces mécaniques en jeu, et génère un couple résistant qui s'oppose à la mobilité du support et provoque un phénomène d'hystéréris.

Le but de la présente invention est de proposer un dispositif support pour tambour rotatif, comprenant au moins un galet de roulement apte à coopérer avec ledit tambour, qui pallie les inconvénients précités et permette de maintenir l'axe du galet toujours parallèle à celui du tambour.

Un autre but de la présente invention est de proposer un dispositif support pour tambour rotatif dans lequel le nombre de pièces soumises au frottement soit minimisé.

Un avantage de la présente invention est de ralentir l'usure des pièces mécaniques utilisées.

D'autres buts et avantages de la présente invention apparaîtront au cours de la description qui va suivre qui n'est donnée qu'à titre indicatif et qui n'a pas pour but de la limiter.

La présente invention concerne un dispositif support pour tambour rotatif tel que, par exemple, four, sécheur, refroidisseur ou autres, destiné notamment, aux traitements thermiques et/ou chimiques de matières, comprenant au moins un galet de roulement, apte à coopérer avec ledit tambour, et au moins deux paliers, aptes à permettre la rotation dudit galet autour de son axe de rotation, caractérisé par le fait qu'il comprend, en outre :
- un châssis, auquel lesdits paliers sont assujettis, montés articulés autour d'un axe de pivotement sensiblement perpendiculaire au plan passant par l'axe de rotation dudit galet et normal au massif sur lequel ledit dispositif est placé, appelé plan d'articulation,
- des moyens de liaison, flexibles selon une direction donnée, dite direction de flexibilité, et rigides dans les directions orthogonales à ladite direction de flexibilité, pour maintenir lesdits paliers sur ledit massif tout en laissant libre le mouvement d'articulation dudit châssis,
de manière à permettre l'alignement dudit galet sur le tambour en cas de pivotement de ce dernier.

L'invention concerne également un tambour rotatif équipé d'au moins un dispositif support tel que décrit ci-dessus.

La présente invention sera mieux comprise à la lecture de la description suivante, accompagnée des dessins en annexe qui en font partie intégrante et parmi lesquels :
- la figure 1 est une vue de coupe illustrant un premier exemple de réalisation du dispositif support conforme à l'invention, la coupe étant réalisée selon un plan perpendiculaire à l'axe de rotation du tambour rotatif avec lequel ledit dispositif support coopère,
- la figure 2 est une vue de coupe réalisée d'après la ligne II-II illustrée à la figure 1 précédente,
- la figure 3 est une vue de coupe, réalisée selon les mêmes modalités que celles illustrées à la figure 2, décrivant un autre exemple avantageux de réalisation du dispositif support conforme à l'invention,
- la figure 4 reprend le dispositif support illustré à la figure 1 dans une configuration d'utilisation différente.

La présente invention concerne un dispositif support pour tambour rotatif tel que, par exemple, four, sécheur, refroidisseur ou autres, destiné, notamment, aux traitements thermiques et/ou chimiques de matières.

Toutefois, bien que plus particulièrement prévue pour de telles applications, elle pourra également être utilisée dans de nombreux autres secteurs de l'activité économique tels que, par exemple, l'industrie agro-alimentaire pour équiper, notamment, des extracteurs primaires de sucre ou autres.

De manière générale, lesdits tambours rotatifs sont constitués, par exemple, d'appareils sensiblement cylindriques, présentant une structure tubulaire de section sensiblement circulaire, aptes à être entraînés autour de leur axe longitudinal.

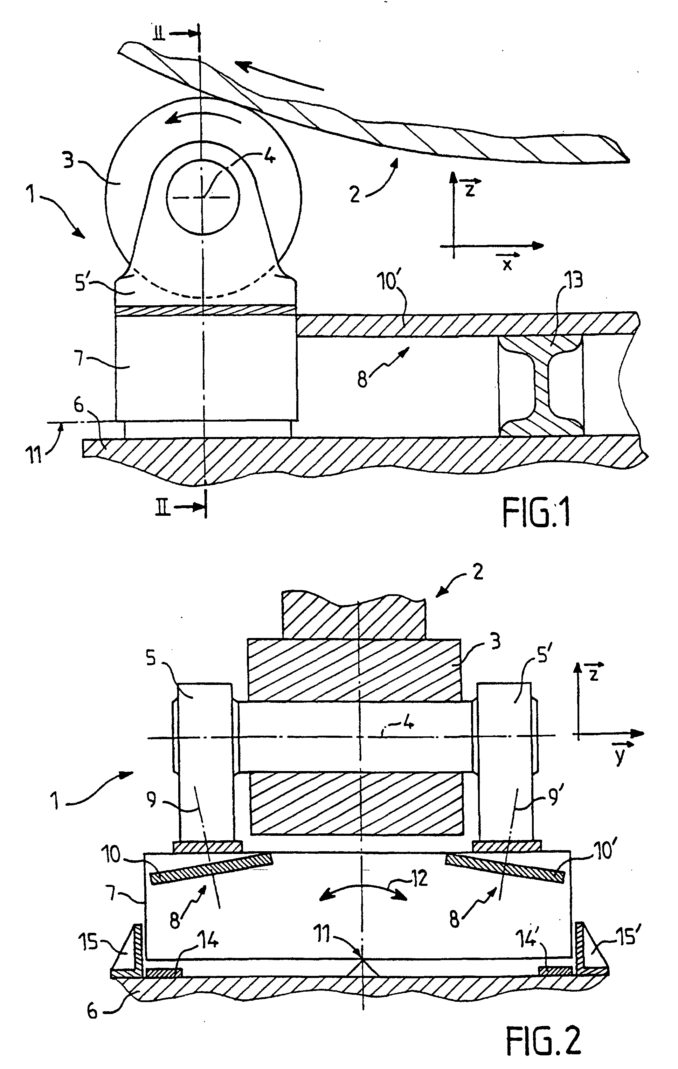

Comme représenté à la figure 1, le dispositif support 1 pour tambour rotatif 2 conforme à l'invention comprend au moins un galet de roulement 3, apte à coopérer avec ledit tambour 2.

Ledit galet 3 permet, notamment, soit le roulement seul dudit tambour 2, ce dernier étant entraîné par ailleurs, soit à la fois le roulement et l'entraînement dudit tambour. Il présente, par exemple, une structure cylindrique, de section circulaire, son axe de rotation 4 étant sensiblement parallèle à celui dudit tambour 2.

Pour permettre la rotation dudit galet 3 autour dudit axe de rotation 4, ledit dispositif de support 1 conforme à l'invention comprend également au moins deux paliers 5, 5'.

Dans la suite du texte, pour faciliter la compréhension du fonctionnement du dispositif conforme à l'invention, nous utiliserons un repère orthogonal x, y, z, la direction y correspondant à celle de l'axe du tambour 2 et/ou du galet 4, et la direction z à celle de la normale au massif 6 sur lequel ledit dispositif 1 est placé.

Selon l'invention, ledit dispositif support 1 permet l'alignement dudit galet 3 sur le tambour 2 en cas de pivotement de ce dernier.

A cet effet, comme cela apparaît, en se reportant à la fois aux figures 1 et 2, il comprend, en outre, un châssis 7 auquel lesdits paliers 5, 5' sont assujettis. Comme illustrée par la flèche repérée 12, ledit châssis 7 est monté articulé autour d'un axe de pivotement, orienté selon la direction x et repéré 11, sensiblement perpendiculaire au plan y, z passant par l'axe de rotation 4 dudit galet 3 et normal au massif 6, appelé plan d'articulation.

Ainsi, lorsque la position de l'axe du tambour 2 varie au cours de son fonctionnement, le galet 3 est capable de rendre son axe 4 parallèle à celui dudit tambour 2, et d'assurer un contact uniforme avec la surface périphérique dudit tambour 2.

De plus, pour maintenir lesdits paliers 5, 5' sur ledit massif 6 tout en laissant libre le mouvement d'articulation dudit châssis 7, ledit dispositif support 1 comprend des moyens de liaison 8, flexibles selon une direction donnée, repérée 9, 9', dite direction de flexibilité, et rigides dans les directions orthogonales à ladite direction de flexibilité 9, 9'.

L'ensemble des mouvements s'effectue donc sans glissement permettant, en conséquence, de diminuer les phénomènes d'usure.

La longueur du châssis 7 est, par exemple, légèrement supérieure à l'entraxe prévu entre lesdits paliers 5, 5'.

Lesdits moyens de liaison 8 sont constitués, par exemple, par au moins deux pièces allongées 10, 10', notamment parallélépipédiques, prévues sensiblement symétriquement de part et d'autre du plan x, z, dit plan médian, passant par l'axe de pivotement 11 et orthogonal audit plan d'articulation y, z. Lesdites pièces 10, 10' sont assujetties, d'une part, audit châssis 7 et, d'autre part, audit massif 6, notamment par l'intermédiaire d'un bâti 13.

Ladite direction de flexibilité 9, 9' est prévue, par exemple, selon une orientation se rapprochant de la normale z au massif 6 ou confondue avec ladite normale au massif 6.

Lesdites pièces allongées 10, 10' sont constituées, notamment, d'une poutrelle de section alatie, par exemple sensiblement rectangulaire, de faible épaisseur par rapport à la largeur et la longueur desdites poutrelles, la longueur de ladite section aplatie étant orientée selon une direction sensiblement orthogonale à ladite direction de flexibilité 9, 9'.

On constaté ainsi que, lors du pivotement du châssis 7, sous l'action du tambour 2, lesdites pièces allongées 10, 10' travaillent, notamment, en flexion et ceci, par exemple, selon des déformations élastiques en fonction de la nature du matériau choisi.

Dans la pratique, il s'agit de déformations très légères. En effet, les amplitudes de déformations du tambour 2 sont assez faibles. De plus, dans les conditions normales de fonctionnement, l'amplitude des mouvements verticaux dudit châssis 7 ne doit pas excéder une valeur donnée pouvant être fixée, à titre d'exemple à 8 .10⁻⁵ fois la longueur du tambour 2.

A ce sujet, le dispositif 1 conforme à l'invention pourra comprendre, en outre, des cales 14, 14' et/ou des pièces d'arrêt 15, 15', aptes à limiter les éventuels déplacements dudit dispositif 1.

Lesdites cales 14, 14' sont, par exemple, fixées au massif 6 et limitent mécaniquement l'amplitude du mouvement vertical du châssis 7 à une valeur inférieure ou égale à une limite supérieure située entre 3.10⁻⁵ et 8.10⁻⁵ fois la longueur du tambour 2. Elles empêchent ainsi que le dispositif de support 1 ne soit détérioré à la suite de l'existence de conditions anormales.

Dans le même esprit, les pièces d'arrêt 15, 15' sont, par exemple, fixées au massif 6 de chaque côté des extrémités longitudinales dudit châssis 7. Ils empêchent ainsi les mouvements horizontaux de cette dernière dans la direction y.

Lesdites pièces allongées 10, 10' sont, par exemple, perpendiculaires audit châssis 7 et donc orientées sensiblement parallèlement à la direction y.

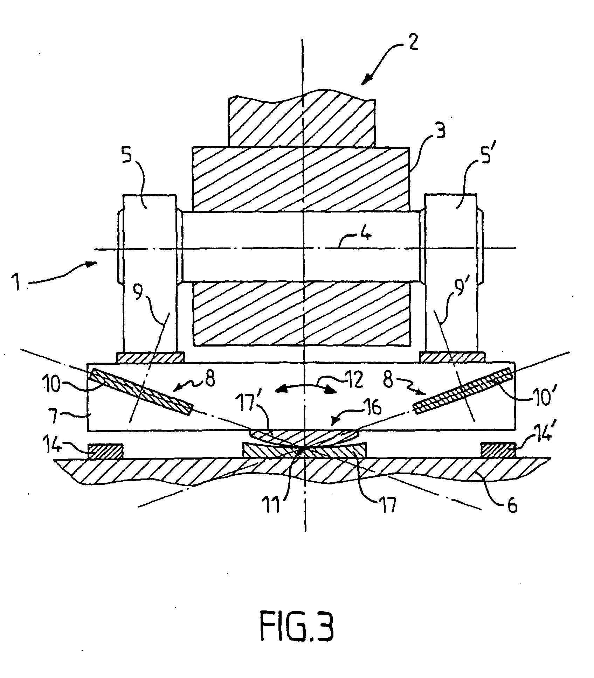

Comme représentée à la figure 3, selon un mode de réalisation avantageux, ladite direction de flexibilité 9, 9' est prévue selon une orientation se rapprochant de la tangente au cercle ayant pour centre le point d'intersection entre le plan d'articulation y, z et l'axe de pivotement 11 et passant au niveau du point d'attache desdites pièces allongées 10, 10' sur le châssis 7. Dans ce cas de figure, lesdites poutrelles 10, 10' sont, par exemple, orientées radialement.

Ledit axe de pivotement 11 est prévu, notamment, au niveau du plan x, z de symétrie des paliers 5, 5', c'est-à-dire au niveau du plan médian.

Selon une première variante de réalisation, l'articulation s'effectue par rotation autour dudit axe de pivotement 11.

Toutefois, selon une variante de réalisation avantageuse, correspondante à celle illustrée à la figure 3, l'articulation peut être effectuée par roulement. Pour cela, le dispositif 1 comprend, en outre, par exemple, un organe support 16, au niveau duquel ledit axe de pivotement 11 est prévu.

Ledit organe support 16 est constitué, notamment, de deux pièces 17, 17', coopérant l'une avec l'autre, l'une supérieure 17' étant assujettie audit châssis 7 et l'autre inférieure 17 audit massif 6. Lesdites pièces 17, 17' sont formées de secteur de cylindre de section circulaire, l'axe dudit cylindre étant parallèle à l'axe de pivotement 11 et le rayon de la pièce supérieure 17' étant, par exemple, légèrement inférieur au rayon de la pièce inférieure 17.

Selon un autre mode de réalisation, l'une desdites pièces 17, 17' pourra présenter une surface de contact plane.

Dans ces différents cas, le châssis 7 roule alors sans glisser sur le massif 6, l'axe de pivotement 11 étant défini par la droite de contact entre lesdites pièces inférieure et supérieure 17, 17'.

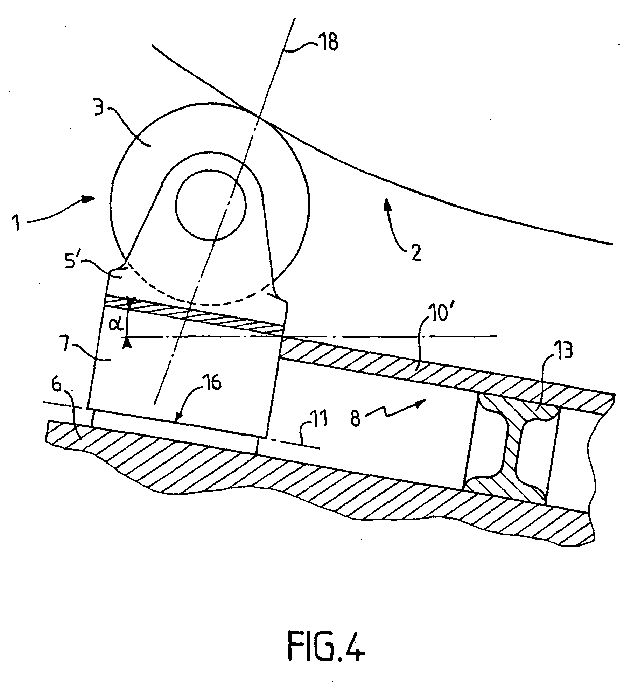

Cela étant, la figure 4 représente par la direction repérée 18 la résultante des forces exercées sur le galet 3 par le poids du tambour 2 d'une part, et les forces de frottement d'autre part.

Pour que l'ensemble du dispositif de support 1 soit en équilibre mécanique stable, ladite résultante 18 doit couper l'organe support 16 entre ses deux points extrêmes. La réalisation de cette condition peut obliger à augmenter les dimensions du dispositif 1 au-delà de ce qui est nécessaire pour sa résistance mécanique.

Pour éviter ceci, on pourra aussi prévoir, éventuellement, un dispositif 1 incliné d'un angle α donné par rapport à l'horizontale en direction du tambour 2 dans un plan normal au plan d'articulation y, z de manière à ce que ladite résultante 18 des forces exercées par le tambour 2 sur ledit dispositif 1 passe au niveau du voisinage de l'intersection dudit plan d'articulation y, z et de l'axe de pivotement 11.

Dans ce cas, ledit massif 6 est lui aussi éventuellement, incliné du même angle α.

L'invention concerne également un tambour rotatif 2 équipé d'au moins un dispositif support 1 tel que présenté ci-dessus.

De manière avantageuse, ledit tambour rotatif 2 sera équipé d'une ou plusieurs stations de roulement constituées de deux dits dispositifs de supports 1 tels que décrits ci-dessus.

A titre de remarque, il est à noter que le galet de roulement 3 est soit en contact direct avec la surface extérieure dudit tambour 2, soit en contact avec un anneau prévu autour dudit tambour 2 au niveau de chaque station de roulement, comme représenté.

Par ailleurs, comme précédemment évoqué, l'invention peut s'appliquer aux tambours rotatifs de grande dimension quel que soit leur mode d'entraînement, soit par l'intermédiaire d'une couronne dentée et de pignons, soit par frottements entre galet et tambour. Dans ce dernier cas, les galets moteurs seront avantageusement intégrés à des dispositifs supports 1 tels que décrits plus haut.

Naturellement, d'autres modes de mise en oeuvre, à la portée de l'homme de l'art, auraient pu être envisagés sans pour autant sortir du cadre de la présente demande.

## Revendications

1. Dispositif support (1) pour tambour rotatif (2) tel que, par exemple four, sécheur, refroidisseur ou autres, destiné, notamment, aux traitements thermiques et/ou chimiques de matières, comprenant au moins un galet de roulement (3), apte à coopérer avec ledit tambour (2), et au moins deux paliers (5, 5'), aptes à permettre la rotation dudit galet (3) autour de son axe de rotation (4),
- un châssis (7), auquel lesdits paliers (5, 5') sont assujettis, montée articulée autour d'un axe de pivotement (11) sensiblement perpendiculaire au plan passant par l'axe de rotation (4) dudit galet (3) et normal au massif (6) sur lequel ledit dispositif est placé, appelé plan d'articulation, **caractérisé par le fait qu'**il comprend, en outre :
- des moyens (8) de liaison, flexibles selon une direction donnée (9, 9'), dite direction de flexibilité, et rigides dans les directions orthogonales à ladite direction de flexibilité (9, 9'), pour maintenir lesdits paliers (5, 5') sur ledit massif (6) tout en laissant libre le mouvement d'articulation dudit châssis (7),
de manière à permettre l'alignement dudit galet (3) sur le tambour (2) en cas de pivotement de ce dernier.

2. Dispositif selon la revendication 1, dans lequel lesdits moyens de liaison (8) sont constitués par au moins deux pièces allongées (10, 10'), prévues sensiblement symétriquement de part et d'autre du plan passant par l'axe de pivotement (11) et orthogonal audit plan d'articulation, dit plan médian, lesdites pièces (10, 10') étant assujetties, d'une part, audit châssis (7) et, d'autre part, audit massif (6).

3. Dispositif selon la revendication 1, dans lequel ladite direction de flexibilité (9, 9') est prévue selon une orientation se rapprochant de la normale au massif (6).

4. Dispositif selon la revendication 2, dans lequel lesdites pièces allongées (10, 10') sont constituées d'une poutrelle de section aplatie, la longueur de ladite section aplatie étant orientée selon une direction sensiblement orthogonale à ladite direction de flexibilité (9, 9').

5. Dispositif selon la revendication 2, dans lequel ladite direction de flexibilité (9, 9') est prévue selon une orientation se rapprochant de la tangente au cercle ayant pour centre le point d'intersection entre le plan d'articulation et l'axe de pivotement (11) et passant au niveau du point d'attache desdites pièces allongées (10, 10') sur le châssis (7).

6. Dispositif selon la revendication 1, dans lequel ledit axe de pivotement (11) est prévu au niveau du plan de symétrie des paliers (5, 5 ').

7. Dispositif selon la revendication 1 comprenant, en outre, un organe support (16), au niveau duquel ledit axe de pivotement (11) est prévu, constitué de deux pièces (17, 17') coopérant l'une avec l'autre, l'une supérieure (17') étant assujettie audit châssis (7) et l'autre inférieure (17) audit massif (6), lesdites pièces (17, 17') étant formées de secteurs de cylindre de section circulaire, l'axe dudit cylindre étant parallèle à l'axe de pivotement (11).

8. Dispositif selon la revendication 1 comprenant, en outre, des cales (14, 14') et/ou des pièces d'arrêt (15, 15') aptes à limiter les éventuels déplacements dudit dispositif (1).

9. Dispositif selon la revendication 1 prévu incliné d'un angle α donné par rapport à l'horizontale en direction du tambour (2) dans un plan normal au plan d'articulation de manière à ce que la résultante (18) des forces exercées par le tambour (2) sur ledit dispositif (1) passe au niveau du voisinage de l'intersection dudit plan d'articulation et de l'axe de pivotement (11).

10. Tambour rotatif (2) équipé d'au moins un dispositif support (1) selon la revendication 1.

## Patentansprüche

1. Trägervorrichtung (1) für Drehtrommel (2) wie zum Beispiel Ofen, Trockner, Kühler oder dergleichen, vorgesehen insbesondere für die thermischen und/oder chemischen Verarbeitungen von Materialien, umfassend wenigstens eine Laufrolle (3), die geeignet ist, mit der besagten Trommel (2) zusammenzuwirken, und wenigstens zwei Lager (5, 5'), die geeignet sind, die Umdrehung der besagten Rolle (3) um ihre Drehachse (4) zu erlauben,
- einen Rahmen (7), an dem die besagten Lager (5, 5') befestigt sind, gelenkig um eine Schwenkachse (11) gelagert, die im wesentlichen senkrecht ist zur Ebene, welche durch die Drehachse (4) der besagten Rolle (3) und senkrecht zum Fundament (6), auf dem die besagte Vorrichtung aufgestellt wird, verläuft, welche Gelenkebene genannt wird, **dadurch gekennzeichnet, daß** sie außerdem folgendes umfaßt:
- Verbindungsmittel (8), die nach einer bestimmten Richtung (9, 9'), welche die Flexibilitätsrichtung genannt wird, flexibel und nach den zu der besagten Flexibilitätsrichtung (9, 9') rechtwinkligen Richtungen starr sind, um die besagten Lager (5, 5') auf dem besagten Fundament (6) zu halten, während die gelenkige Bewegung des besagten Rahmens (7) frei gelassen wird,
um derart die Ausrichtung der besagten Rolle (3) auf der Trommel (2) bei dem Schwenken dieser letzteren zu erlauben.

2. Vorrichtung nach Anspruch 1, bei der die besagten Verbindungsmittel (8) aus wenigstens zwei länglichen Teilen (10, 10') gebildet sind, die im wesentlichen symmetrisch beiderseits der Ebene, welche durch die Schwenkachse (11) verläuft, und rechtwinklig zu der besagten Gelenkebene vorgesehen sind, die Mittelebene genannt wird, wobei die besagten Teile (10, 10'), einerseits, an dem besagten Rahmen (7) und, andererseits, mit dem besagten Fundament (6) befestigt sind.

3. Vorrichtung nach Anspruch 1, bei der die besagte Flexibilitätsrichtung (9, 9') nach einer Orientierung vorgesehen ist, die sich der Senkrechten des Fundaments (6) nähert.

4. Vorrichtung nach Anspruch 2, bei der die besagten längliche Teile (10, 10') aus einem Balken mit abgeflachtem Querschnitt bestehen, wobei die Länge des besagten abgeflachten Querschnitts nach einer Richtung orientiert sei, die zu der besagten Flexibilitätsrichtung (9, 9') im wesentlichen senkrecht ist.

5. Vorrichtung nach Anspruch 2, bei der die besagte Flexibilitätsrichtung (9, 9') nach einer Orientierung vorgesehen ist, die sich der Tangente des Kreises nähert, welcher den Schnittpunkt zwischen der Gelenkebene und der Schwenkachse (11) als Zentrum hat und durch den Bereich des Befestigungspunktes der besagten länglichen Teile (10, 10') an dem Rahmen (7) verläuft.

6. Vorrichtung nach Anspruch 1, bei der die besagte Schwenkachse (11) im Bereich der Symmetrieebene der Lager (5, 5') vorgesehen ist.

7. Vorrichtung nach Anspruch 1, umfassend außerdem ein Trägerorgan (16), in dessen Bereich die besagte Schwenkachse (11) vorgesehen ist, bestehend aus zwei miteinander zusammenwirkenden Teilen (17, 17'), wobei der obere davon (17') an dem besagten Rahmen (7), und der untere davon (17) an dem besagten Fundament (6) befestigt ist, wobei die besagten Teile (17, 17') aus Zylindersegmenten mit kreisförmigem Querschnitt gebildet sind, wobei die Achse des besagten Zylinders parallel zur Schwenkachse (11) ist.

8. Vorrichtung nach Anspruch 1, umfassend außerdem Unterlegkeile (14, 14') und/oder Anhaltteile (15,15'), die geeignet sind, die möglichen Verschiebungen der besagten Vorrichtung (1) zu begrenzen.

9. Vorrichtung nach Anspruch 1, die schräg nach einem bestimmten Winkel α hinsichtlich der Horizontale in Richtung auf die Trommel (2) in einer zur Gelenkebene senkrechten Ebene derart vorgesehen ist, daß die Resultante (18) der Kräfte, die durch die Trommel (2) auf die Trägervorrichtung (1) ausgeübt werden, im Bereich der Nachbarschaft des Schnittpunktes der besagten Gelenkebene und der Schwenkachse (11) verläuft.

10. Drehtrommel (2), die mit wenigstens einer Trägervorrichtung (1) gemäß Anspruch 1 ausgestattet ist.

## Claims

1. A supporting device (1) for a rotary drum (2) such as, for example an oven, a dryer, a cooler or others, intended notably for thermal and/or chemical treatments of materials, comprising at least one roller (3), capable of co-operating with said drum (2), and at least two bearings (5, 5'), capable of initiating the rotation of said roller (3) around its rotational axis (4), a chassis (7), to which said bearings (5, 5') are slaved, mounted to pivot around a pivoting axis (11) substantially perpendicular to the plane going through the rotational axis (4) of said roller (3) and normal to the body (6) whereon said device is situated, so-called hinging plane, **characterised in that** it comprises, moreover: linking means (8), flexible along a given direction (9, 9'), so-called flexibility direction, and rigid in the directions orthogonal to said flexibility direction (9, 9') to maintain said bearings (5, 5') on said body (6) while leaving the hinging movement of said chassis (7) unimpeded, to enable the alignment of said roller (3) on the drum (2) in case when the former is pivoting.

2. A device according to claim 1, wherein said linking means (8) consist of at least two oblong parts (10, 10'), provided substantially symmetrical on either side of the plane going through the pivot axis (11) and orthogonal to said hinging plane, so-called median plane, where said parts (10, 10') are slaved, on the one hand, to said chassis, (7) and, on the other hand, to said body (6).

3. A device according to claim 1, wherein said flexibility direction (9, 9') is provided along an orientation closed to the normal of the body (6).

4. A device according to claim 2, wherein said oblong parts (10, 10') consist of a beam with flat section, whereas the length of said flat section is oriented along a direction substantially orthogonal to said flexibility direction (9, 9').

5. A device according to claim 2, wherein said flexibility direction (9, 9') is provided along an orientation close to the tangent to the circle having as a centre the point of intersection between the hinging plane and the pivoting axis (11) and running over the chassis (7) at the fastening point of said oblong parts (10, 10').

6. A device according to claim 1, wherein said pivoting axis (11) is provided at the plane of symmetry of the bearings (5, 5').

7. A device according to claim 1 comprising, besides, a supporting member (16), whereat said pivoting axis (11) is provided, consisting of two parts (17, 17') co-operating together, the upper one (17') is slaved to said chassis (7) and the lower one (17) to said body (6), whereas said parts (17, 17') are formed of cylindrical sectors of circular section, whereas the axis of said cylinder is parallel to the pivoting axis (11).

8. A device according to claim 1 comprising, moreover, wedges (14, 14') and/or stop parts (15, 15') capable of limiting the possible displacements of said device (1).

9. A device according to claim 1, provided as tilted by a given angle α with respect to the horizontal toward the drum (2) on a plane normal to the hinging plane so that the resultant (18) of the loads exerted by the drum (2) whereon said device (1) passes close to the intersection of said hinging plane and of the pivoting axis (11).

10. A rotary drum (2) fitted with at least a supporting device (1) according to claim 1.
